# FASCICULE DE BREVET EUROPEEN

(11) **EP 2 555 928 B1**
(45) Date de publication et mention de la délivrance du brevet: **30.12.2015**
(21) Numéro de dépôt: 11719335.9
(22) Date de dépôt: 05.04.2011
(51) Int. Cl.: B60B 27/00, F16C 19/18, F16C 43/06, B60B 27/02, B60B 3/02

(54) **Procédé d'assemblage d'un palier à roulement et procédé de montage d'une roue de véhicule au moyen d'un tel palier**
Montageverfahren eines Wälzlagers und Montageverfahren eines Fahrzeugrads unter Verwendung eines solchen Lagers
Assembling method of a rolling bearing and mounting method of a vehicle wheel using such a bearing

(30) Priorité: 06.04.2010 FR 1001421
(43) Date de publication de la demande: 13.02.2013
(73) Titulaire: NTN-SNR Roulements, 74000 Annecy (FR)
(72) Inventeur: BERTHIER, Julien, F-74410 Saint Jorioz (FR); TSEN, Cynthia, F-73100 Mouxy (FR)
(74) Mandataire: Sayettat, Julien Christian
(86) Numéro de dépôt international: PCT/FR2011/050760
(87) Numéro de publication internationale: WO 2011/124837

(56) Documents cités:
- EP-A2- 1 840 391
- DE-A1-102007 053 149
- DE-B- 1 154 981
- FR-A1- 2 492 483
- US-A- 4 668 111
- US-A1- 2004 068 872

## Description

L'invention concerne un procédé d'assemblage d'un palier à roulement ainsi qu'un procédé de montage d'une roue de véhicule automobile au moyen d'un tel palier.

Un tel procédé d'assemblage d'un palier à roulement est connu du document DE1154981B.

L'invention s'applique au palier à roulement comprenant deux bagues respectivement extérieure et intérieure - qui sont montées en rotation relative par l'intermédiaire de deux rangées de corps roulants.

En particulier, la bague fixe est destinée à être solidarisée à la structure du véhicule et la roue est destinée à être montée en rotation par l'intermédiaire de la bague tournante. Avantageusement, l'invention s'applique au montage d'une roue non motrice au moyen d'un palier dans lequel la bague extérieure est tournante et la bague intérieure est fixe.

Pour le montage d'une roue, on connaît des paliers à roulement comprenant un organe extérieur et un organe intérieur, au moins un desdits organes comprenant une bague rapportée sur laquelle une piste de roulement est formée. En particulier, cette réalisation permet l'assemblage du palier en prévoyant le sertissage de la bague sur l'organe après l'introduction des corps roulants.

Toutefois, de tels paliers à roulement pour le montage d'une roue de véhicule automobile sont relativement massifs, ce qui pose des problèmes de poids, d'encombrement et de coûts. En outre, du fait des sollicitations mécaniques qui en résultent, cette contrainte est plus importante en cas d'intégration dans le palier d'une partie des fonctions d'association des structures environnantes. L'invention a pour but de perfectionner l'art antérieur en proposant notamment un procédé d'assemblage d'un palier à roulement dont le compromis entre la masse et la résistance mécanique est optimisé pour l'application considérée, notamment relativement à la durée de vie, à la rigidité et à la tenue en fatigue dudit palier.

A cet effet, selon un premier aspect, l'invention propose un procédé d'assemblage d'un palier à roulement comprenant deux bagues - respectivement extérieure et intérieure - montées en rotation relative par l'intermédiaire de deux rangées de corps roulants, chaque bague présentant deux pistes de roulement - respectivement interne et externe - qui sont espacées axialement avec un diamètre de la piste externe qui est inférieur au diamètre de la piste interne, les pistes internes - respectivement externes - étant disposées en regard pour former un chemin de roulement interne - respectivement externe - dans lequel une rangée de corps roulants est disposée, ledit procédé prévoyant de :
- former sur au moins une bague une encoche entre ses pistes de roulement ;
- disposer la bague extérieure autour de la bague intérieure avec leurs pistes de roulement en regard ;
- décentrer lesdites bagues pour former une bouche supérieure d'introduction des corps roulants dans le chemin de roulement interne ;
- disposer l'encoche dans la bouche supérieure de sorte à former un passage de taille suffisante pour les corps roulants ;
- introduire les corps roulants de la rangée externe dans la bouche supérieure pour les disposer dans le chemin de roulement externe par l'intermédiaire du passage ;
- tourner relativement les bagues afin que l'encoche ne forme plus, dans la bouche supérieure, un passage de taille suffisante pour les corps roulants ;
- introduire les corps roulants de la rangée interne dans la bouche supérieure pour les disposer dans le chemin de roulement interne ;
- recentrer les bagues.

Selon un deuxième aspect, l'invention propose un procédé de montage d'une roue de véhicule automobile au moyen d'un palier à roulement assemblé par mise en oeuvre d'un tel procédé, ledit palier comprenant deux bagues monobloc - respectivement extérieure et intérieure - montées en rotation relative par l'intermédiaire de deux rangées de corps roulants, la bague intérieure étant associée à la structure du véhicule du côté interne et la bague extérieure étant associée à la roue du côté externe, chaque bague présentant deux pistes de roulement - respectivement interne et externe - qui sont espacées axialement avec un diamètre de la piste externe qui est inférieur au diamètre de la piste interne, les pistes internes - respectivement externes - étant disposées en regard pour former un chemin de roulement interne - respectivement externe - dans lequel une rangée de corps roulants est disposée, au moins une bague présentant une encoche entre ses pistes de roulement.

Un insert de précharge es disposé autour de la piste de roulement externe.

D'autres objets et avantages de l'invention apparaîtront dans la description qui suit, faite en référence aux figures annexées, dans lesquelles :
- la figure 1 est une vue partielle en coupe longitudinale du montage d'une roue de véhicule automobile au moyen d'un palier à roulement selon un mode de réalisation de l'invention, la figure 1a est une vue agrandie de la figure 1 montrant plus particulièrement le palier ;
- la figure 2 est une vue analogue à la figure 1a montrant un palier à roulement selon un autre mode de réalisation de l'invention, la figure 2a représente une variante de la réalisation de la figure 2 ;
- les figures 3 illustrent un palier à roulement lors de respectivement une étape de son procédé d'assemblage ;
- les figures 4 représentent une cage de rétention des billes des paliers représentés, respectivement en perspective (figure 4) et en vue agrandie (figure 4a).

En relation avec ces figures, on décrit ci-dessous un palier à roulement comprenant deux bagues - respectivement extérieure 1 et intérieure 2 - montées en rotation relative par l'intermédiaire de deux rangées de corps roulants 3. Dans la description, les termes « extérieur » et « intérieur » sont définis par rapport à l'axe de rotation du palier, respectivement pour une localisation éloignée et proche dudit axe.

En particulier, le palier est destiné au montage d'une roue 4 de véhicule automobile, plus précisément d'une roue non motrice d'un tel véhicule. Pour ce faire, la bague extérieure 1 est montée tournante autour de la bague intérieure 2, ladite bague extérieure présentant des moyens d'association 1a en rotation de la roue 4 et ladite bague intérieure présentant des moyens d'association 2a à la structure du véhicule. Toutefois, l'invention n'est pas limitée à une telle application, en particulier les moyens 1a, 2a peuvent permettre l'association d'autres organes, et l'invention peut s'appliquer à un montage dans lequel la bague intérieure 2 est tournante et la bague extérieure 1 est fixe.

En particulier, les bagues 1, 2 sont des pièces monobloc massives réalisées, par exemple par forge, en acier à roulement. Dans les modes de réalisation représentés, les moyens d'association 1a, 2a sont sous la forme d'orifices de vissage de respectivement la roue 4 et la structure de véhicule.

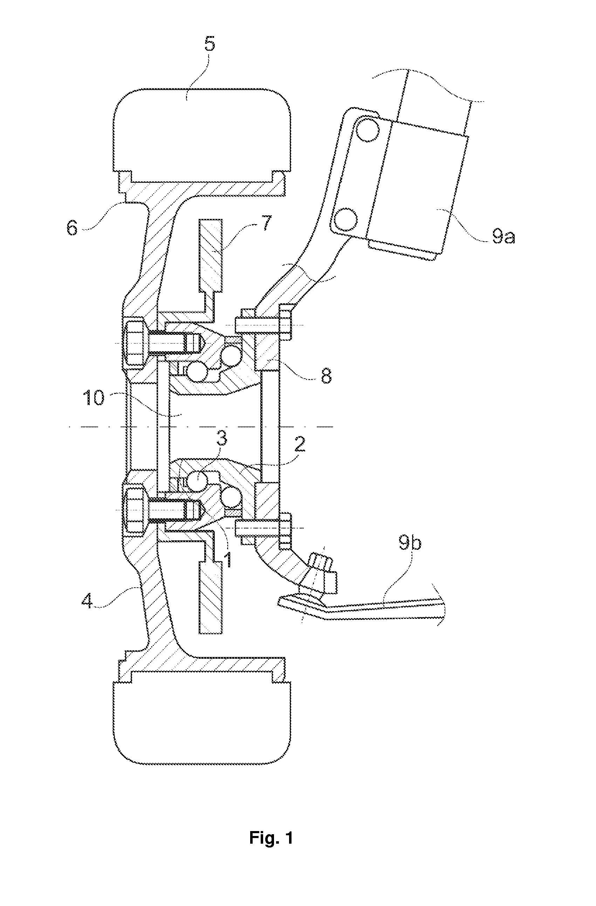

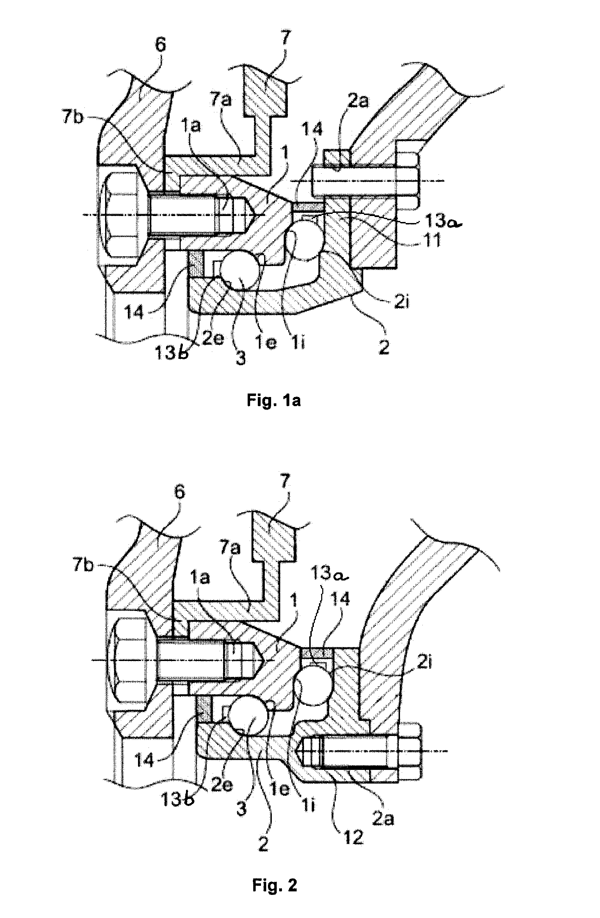

La figure 1 représente un montage dans lequel la bague intérieure 2 est associée à la structure du véhicule du côté interne et la bague extérieure 1 est associée à la roue 4 du côté externe. Dans la description, les termes « externe » et « interne » sont définis par rapport au montage du palier sur le véhicule, respectivement à gauche des figures pour la roue 4 et à droite de ces figures pour la structure du véhicule.

Plus précisément, la roue 4 comprend un pneu 5 monté sur une jante 6, ladite jante présentant des orifices d'association à la bague extérieure 1. En outre, le disque de frein 7 est interposé entre la jante 6 et la bague extérieure 1. En particulier, le centrage du disque de frein 7 est réalisé directement sur la bague extérieure 1, en prévoyant qu'une portée axiale 7a dudit disque soit en appui sur une portée correspondante de ladite bague extérieure et qu'une portée radiale 7b dudit disque soit pourvue d'orifices d'association pour être interposée entre la jante 6 et ladite bague extérieure.

Par ailleurs, la structure du véhicule comprend un pivot 8 sur lequel sont fixés par vissage, respectivement en partie supérieure et en partie inférieure, un élément de suspension 9a et une biellette de direction 9b.

Dans les modes de réalisation représentés, la bague intérieure 2 présente un alésage intérieur 10 afin de gagner du poids. En outre, la bague extérieure 1 présente une portée radiale externe dans laquelle les orifices d'association 1a sont répartis. Concernant les orifices d'association 2a de la bague intérieure 2, la figure 1a montre leur répartition sur un flasque radial 11 de ladite bague, ledit flasque étant disposé côté interne du palier et s'étendant radialement en regard de la bague extérieure 1.

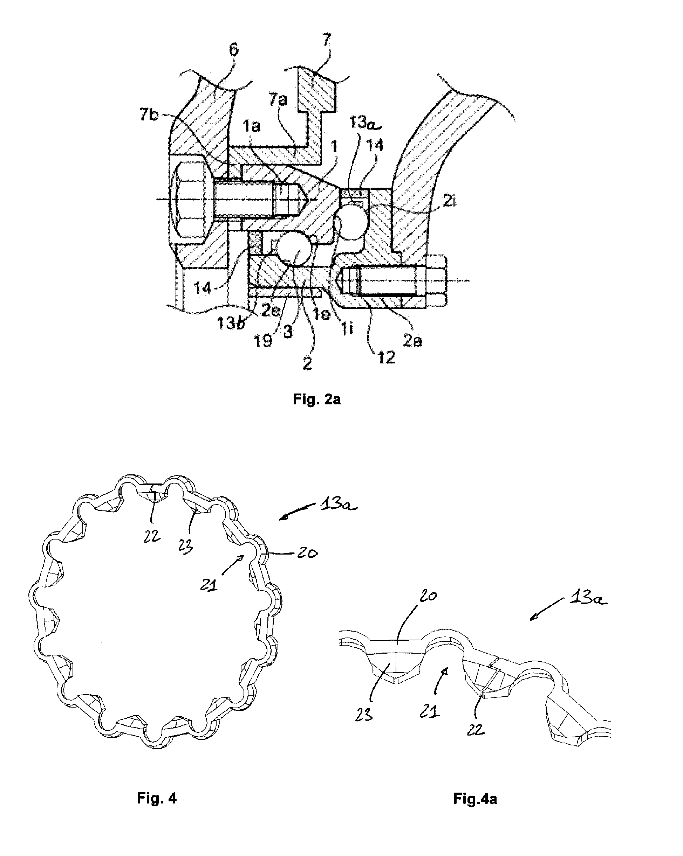

Sur la figure 2, les orifices d'association 2a sont disposés à l'intérieur de la bague intérieure 2. Plus précisément, l'alésage 10 de la bague intérieure 2 est équipé d'un bourrelet 12 dans lequel les orifices d'association 2a sont formés.

Chaque bague 1, 2 présente deux pistes de roulement - respectivement interne 1i, 2i et externe 1 e, 2e - qui sont espacées axialement avec un diamètre de la piste externe 1 e, 2e qui est inférieur au diamètre de la piste interne 1i, 2i. Cette réalisation permet notamment de compacter le palier de sorte à pouvoir gagner en masse tout en préservant la résistance mécanique et la capacité de charge du fait de l'utilisation d'une piste de roulement interne 1i, 2i de diamètre augmenté.

En outre, sur les figures, afin de compacter radialement et axialement le palier, les orifices d'association 1a, 2a des bagues 1, 2 sont répartis angulairement autour de respectivement un cercle primitif, le diamètre primitif des chemins de roulement étant sensiblement égal aux diamètres desdits cercles primitifs. En outre, cette réalisation permet la réalisation dans la bague intérieure 2 d'un alésage 10 de taille importante afin de pouvoir alléger le palier.

Les pistes de roulement internes 1i, 2i - respectivement externes 1 e, 2e - sont disposées en regard pour former un chemin de roulement interne - respectivement externe - dans lequel une rangée de corps roulants 3 est disposée.

Dans les modes de réalisation représentés, les corps roulants sont des billes 3 qui sont maintenues dans leur rangée par une cage de rétention 13. Le palier peut être équipé de moyens d'étanchéité 14 des chemins de roulement pour notamment limiter les fuites de lubrifiant présent dans les chemins de roulement ainsi que la contamination desdits chemins avec des polluants extérieurs.

En particulier, les chemins de roulement sont à contact oblique avec des angles de contact différents. Sur les figures, les angles de contact sont respectivement de 20° pour le chemin interne et de 70° pour le chemin externe, ces valeurs proches respectivement de 0° et de 90° permettent d'intégrer un grand nombre de corps roulants 3 dans les chemins de roulement.

Pour permettre l'assemblage d'un tel palier, on prévoit de former sur au moins une bague 1, 2 une encoche 15 entre ses pistes de roulement 1 i, 1e, 2i, 2e puis de disposer la bague extérieure 1 autour de la bague intérieure 2 avec leurs pistes de roulement 1i, 1e, 2i, 2e en regard. En particulier, l'encoche 15 peut être réalisée entre les pistes de roulement 1i, 1e de la bague extérieure 1, notamment sous la forme d'un chanfrein s'étendant axialement. Avantageusement, l'encoche 15 ne débouche pas dans les chemins de roulements.

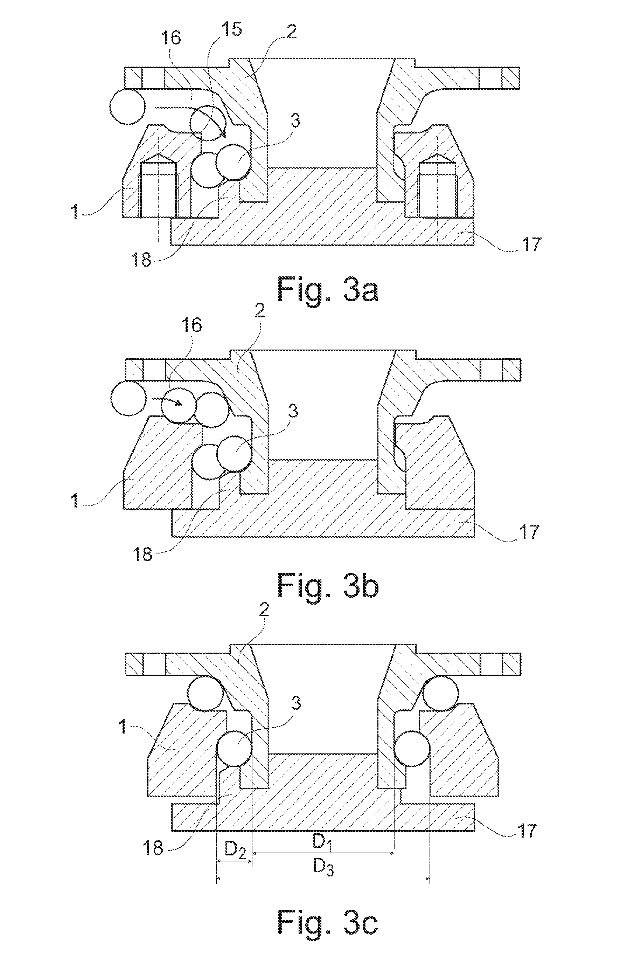

Ensuite, les bagues 1, 2 sont décentrées pour former une bouche supérieure 16 d'introduction des corps roulants 3 dans le chemin de roulement interne. En particulier, les bagues 1, 2 décentrées peuvent être en butée radiale à l'opposé de la bouche supérieure 16 (figures 3a, 3b).

L'encoche 15 est alors disposée, notamment en tournant relativement les bagues 1, 2, dans la bouche 16 de sorte à former un passage de taille suffisante pour les corps roulants 3. Selon une réalisation, le passage peut être réalisé entre une encoche 15 formée sur une bague 1, 2 et la zone de l'autre bague 2, 1 qui est disposée en regard. Selon une autre réalisation, une encoche 15 est formée sur chacune des bagues 1, 2, lesdites encoches étant disposées en regard pour former le passage.

Ensuite, comme représenté sur la figure 3a, on peut introduire les corps roulants 3 de la rangée externe dans la bouche supérieure 16 pour les disposer dans le chemin de roulement externe par l'intermédiaire du passage.

Une fois tous les corps roulants 3 externes introduits, on tourne relativement les bagues 1, 2 afin que l'encoche 15 ne forme plus, dans la bouche supérieure 16, un passage de taille suffisant pour les corps roulants 3.

Ainsi, comme représenté sur la figure 3b, il est possible d'introduire les corps roulants 3 de la rangée interne dans la bouche supérieure pour les disposer dans le chemin de roulement interne. En particulier, le chemin de roulement interne ayant un diamètre supérieur à celui du chemin de roulement externe, il est possible d'y disposer un nombre de corps roulants 3 plus important de sorte à augmenter la capacité de charge du palier.

Enfin, après recentrage des bagues 1, 2 et répartition des corps roulants 3 dans leurs chemins de roulement, le palier est assemblé (figure 3c). On peut ensuite équiper le palier avec les cages de rétention 13 et les dispositifs d'étanchéité 14.

En relation avec les figures 4, on décrit une cage de rétention 13a qui est particulièrement adaptée pour la rangée de corps roulants 3 du chemin de roulement interne. En effet, compte tenu des angles de contact des chemins de roulement, il est avantageux que la cage 13a puisse être montée radialement dans le chemin de roulement interne, c'est-à-dire par la bouche 16, la cage 13b du chemin de roulement externe pouvant être montée axialement.

Pour ce faire, la cage 13a doit être déformable afin de pouvoir être montée radialement autour de la rangée interne de corps roulants 3, alors que la cage 13b peut être indéformable.

Dans le mode de réalisation représenté, la cage 13a présente une couronne 20 sur laquelle s'étendent radialement des logements 21 pour respectivement un corps roulants 3, ladite couronne présentant une fente 22 pour permettre son montage autour de la rangée interne de corps roulants 3. En outre, la fente 22 est équipée d'un moyen de fermeture de la couronne 20 après montage, par exemple par clipage.

Par ailleurs, les logements 21 sont séparés angulairement par des ponts de matière 23 qui présentent une géométrie adaptée pour écarter les corps roulants 3 lors du montage. Ainsi, on facilite la disposition de chacun des corps roulants 3 dans respectivement un logement 21, en particulier en utilisant des ponts 23 en forme de V orienté radialement, la fente 22 étant formée sur un desdits ponts.

De façon avantageuse, l'étape de recentrage des bagues 1, 2 peut comprendre le chauffage de la bague extérieure 1. En effet, comme représenté sur la figure 3c, pour mettre le palier en précharge, il faut que D₁ + 2D₂ soit au moins égal à D₃ ; D₁ étant le diamètre de la piste de roulement externe 2e de la bague intérieure 2, D₂ étant le diamètre des corps roulants 3, D₃ étant le diamètre de la piste de roulement externe 1e de la bague extérieure 1.

Or, par chauffage, notamment par induction de la bague extérieure 1, celle-ci se dilate de sorte à augmenter D₃ par rapport à D₁ + 2D₂ pour arriver au moins à l'égalité entre ses deux termes afin de permettre le recentrage des bagues 1, 2 et la mise en précharge lors du refroidissement. En particulier, cette réalisation permet de disposer un corps roulants 3 en plus dans les chemins de roulements.

En variante représentée sur la figure 2a, le diamètre D₁ peut être défini de manière à obtenir un jeu, l'état de précharge final étant obtenu par frettage d'un insert 19 autour de la piste de roulement externe 2e afin de faire gonfler le diamètre D₁.

De façon avantageuse, comme représenté sur les figures 3, le procédé d'assemblage peut prévoir d'utiliser un outil 17 qui est monté sur la bague intérieure 2, ledit outil comprenant une rampe supérieure 18 de positionnement des corps roulants 3 dans le chemin de roulement externe. En outre, le décentrage et la rotation relative des bagues 1, 2 peuvent alors être réalisés par déplacement de la bague extérieure 1 par rapport à la bague intérieure 2.

## Revendications

1. Procédé d'assemblage d'un palier à roulement comprenant deux bagues - respectivement extérieure (1) et intérieure (2) - montées en rotation relative par l'intermédiaire de deux rangées de corps roulants (3), chaque bague (1, 2) présentant deux pistes de roulement - respectivement interne (1i, 2i) et externe (1e, 2e) - qui sont espacées axialement avec un diamètre de la piste externe (1e, 2e) qui est inférieur au diamètre de la piste interne (1i, 2i), les pistes internes (1i, 2i) - respectivement externes (1e, 2e) - étant disposées en regard pour former un chemin de roulement interne - respectivement externe - dans lequel une rangée de corps roulants (3) est disposée, ledit procédé prévoyant de :
- former sur au moins une bague (1, 2) une encoche (15) entre ses pistes de roulement (1i, 1e ; 2i, 2e) ;
- disposer la bague extérieure (1) autour de la bague intérieure (2) avec leurs pistes de roulement (1i, 1e, 2i, 2e) en regard ;
- décentrer lesdites bagues pour former une bouche supérieure (16) d'introduction des corps roulants (3) dans le chemin de roulement interne ;
- disposer l'encoche (15) dans la bouche supérieure (16) de sorte à former un passage de taille suffisante pour les corps roulants (3) ;
- introduire les corps roulants (3) de la rangée externe dans la bouche supérieure (16) pour les disposer dans le chemin de roulement externe par l'intermédiaire du passage ;
- tourner relativement les bagues (1, 2) afin que l'encoche (15) ne forme plus, dans la bouche supérieure (16), un passage de taille suffisante pour les corps roulants (3) ;
- introduire les corps roulants (3) de la rangée interne dans la bouche supérieure (16) pour les disposer dans le chemin de roulement interne ;
- recentrer les bagues (1, 2).

2. Procédé d'assemblage selon la revendication 1, **caractérisé en ce que** l'étape de recentrage des bagues (1, 2) comprend le chauffage de la bague extérieure (1).

3. Procédé d'assemblage selon la revendication 1 ou 2, **caractérisé en ce que** les bagues (1, 2) décentrées sont en butée radiale à l'opposé de la bouche supérieure (16).

4. Procédé d'assemblage selon l'une quelconque des revendications 1 à 3, **caractérisé en ce que** la disposition de l'encoche (15) dans la bouche supérieure (16) est réalisée en tournant relativement les bagues (1, 2).

5. Procédé d'assemblage selon l'une quelconque des revendications 1 à 4, **caractérisé en ce qu'**il prévoit l'utilisation d'un outil (17) comprenant une rampe supérieure (18) de positionnement des corps roulants (3) dans le chemin de roulement externe.

6. Procédé de montage d'une roue (4) de véhicule automobile au moyen d'un palier à roulement assemblé par mise en oeuvre d'un procédé selon l'une quelconque des revendications 1 à 5, ledit palier comprenant deux bagues monobloc - respectivement extérieure (1) et intérieure (2) - montées en rotation relative par l'intermédiaire de deux rangées de corps roulants (3), la bague intérieure (2) étant associée à la structure du véhicule du côté interne et la bague extérieure (1) étant associée à la roue (4) du côté externe, chaque bague (1, 2) présentant deux pistes de roulement - respectivement interne (1i, 2i) et externe (1e, 2e) - qui sont espacées axialement avec un diamètre de la piste externe (1e, 2e) qui est inférieur au diamètre de la piste interne (1i, 2i), les pistes internes (1i, 2i) - respectivement externes (1e, 2e) - étant disposées en regard pour former un chemin de roulement interne - respectivement externe - dans lequel une rangée de corps roulants (3) est disposée, au moins une bague (1, 2) présentant une encoche (15) entre ses pistes de roulement (1i, 1e ; 2i, 2e), un insert (19) de précharge étant disposé autour de la piste de roulement externe (2e).

7. Montage selon la revendication 6, **caractérisé en ce que** la bague extérieure (1) présente une encoche (15) entre ses pistes de roulement (1i, 1e).

8. Montage selon la revendication 6 ou 7, **caractérisé en ce qu'**au moins une bague (1, 2) présente des moyens d'association (1a, 2a) avec un organe.

9. Montage selon l'une quelconque des revendications 6 à 8, **caractérisé en ce que** les chemins de roulement sont à contact oblique avec des angles de contact différents.

10. Montage selon l'une quelconque des revendications 6 à 9, **caractérisé en ce que** la rangée de corps roulants (3) du chemin de roulement interne est équipée d'une cage de rétention (13a) qui est déformable afin de pouvoir être montée radialement autour de ladite rangée.

11. Montage selon la revendication 10, **caractérisé en ce que** la cage de rétention (13a) présente une couronne (20) sur laquelle s'étendent radialement des logements (21) pour respectivement un corps roulants (3), ladite couronne présentant une fente (22) pour permettre son montage autour de la rangée interne de corps roulants (3).

12. Montage selon la revendication 11, **caractérisé en ce que** la fente (22) est équipée d'un moyen de fermeture de la couronne (20) après montage.

13. Montage selon la revendication 11 ou 12, **caractérisé en ce que** les logements (21) sont séparés angulairement par des ponts de matière (23) qui présentent une géométrie adaptée pour écarter les corps roulants (3) lors du montage.

## Patentansprüche

1. Verfahren zum Zusammenbauen eines Wälzlagers, zwei Ringe - jeweils einen äußeren (1) und inneren (2) - umfassend, die über zwei Reihen von Rollkörpern (3) zueinander drehend montiert sind, wobei jeder Ring (1, 2) zwei Rollbahnen - jeweils innen (1i, 2i) und außen (1e, 2e) - aufweist, die axial in einem Durchmesser der äußeren Rollbahn (1e, 2e) räumlich voneinander getrennt sind, der kleiner ist, als der Durchmesser der inneren Rollbahn (1i, 2i), wobei die innere (1i, 2i) - beziehungsweise die äußere (1e, 2e) - Rollbahn einander gegenüber angeordnet sind, um einen inneren - beziehungsweise äußeren - Rollweg zu bilden, in dem eine Reihe von Rollkörpern (3) angeordnet ist, wobei das besagte Verfahren folgendes vorsieht:
- Bilden einer Kerbe (15) auf zumindest einem Ring (1, 2) zwischen seinen Rollbahnen (1i, 1e; 2i, 2e);
- Anordnen des äußeren Rings (1) um den inneren Ring (2) mit ihren Rollbahnen (1i, 1e; 2i, 2e) jeweils gegenüber;
- Dezentrieren der besagten Ringe zum Bilden einer oberen Öffnung (16) zum Einführen der Rollkörper (3) in den inneren Rollweg;
- Anordnen der Kerbe (15) in der oberen Öffnung (16) um einen Durchlass in ausreichender Größe für die Rollkörper (3) zu bilden;
- Einführen der Rollkörper (3) der äußeren Reihe in die obere Öffnung (16), um sie durch den Durchlass hindurch im äußeren Rollweg anzuordnen;
- Verdrehen der Ringe (1, 2) zueinander, damit die Kerbe (15) im Bereich der oberen Öffnung (16) keinen Durchlass mehr in ausreichender Größe für die Rollkörper (3) bildet;
- Einführen der Rollkörper (3) der inneren Reihe in die obere Öffnung (16), um sie im inneren Rollweg anzuordnen;
- Erneutes Zentrieren der Ringe (1, 2).

2. Verfahren zum Zusammenbauen nach Anspruch 1, **dadurch gekennzeichnet, dass** der Schritt zum erneuten Zentrieren der Ringe (1, 2) das Erwärmen des äußeren Rings (1) umfasst.

3. Verfahren zum Zusammenbauen nach Anspruch 1 oder 2, **dadurch gekennzeichnet, dass** die dezentrierten Ringe (1, 2) gegenüber der oberen Öffnung (16) radial auf Anschlag stehen.

4. Verfahren zum Zusammenbauen nach irgendeinem der Ansprüche 1 bis 3, **dadurch gekennzeichnet, dass** die Anordnung der Kerbe (15) in der oberen Öffnung (16) dadurch erfolgt, dass man die Ringe (1, 2) zueinander verdreht.

5. Verfahren zum Zusammenbauen nach irgendeinem der Ansprüche 1 bis 4, **dadurch gekennzeichnet, dass** es die Verwendung eines Werkzeugs (17) vorsieht, das eine obere Rampe (18) zum Positionieren der Rollkörper (3) im äußeren Rollweg umfasst.

6. Verfahren zum Montieren eines Rades (4) eines Kraftfahrzeugs mittels eines Wälzlagers, das durch Anwenden eines Verfahrens nach irgendeinem der Ansprüche 1 bis 5 zusammengebaut wird, wobei das besagte Lager zwei einteilige Ringe - jeweils einen äußeren (1) und inneren (2) - umfasst, die über zwei Reihen von Rollkörpern (3) zueinander drehend montiert werden, wobei der innere Ring (2) an der Innenseite mit der Fahrzeugstruktur verbunden ist und der äußere Ring (1) an der Außenseite mit dem Rad (4) verbunden ist, wobei jeder Ring (1, 2) zwei Rollbahnen - jeweils innen (1i, 2i) und außen (1e, 2e) - aufweist, die axial in einem Durchmesser der äußeren Rollbahn (1e, 2e) räumlich voneinander getrennt sind, der kleiner ist, als der Durchmesser der inneren Rollbahn (1i, 2i), wobei die innere (1i, 2i) - beziehungsweise die äußere (1e, 2e) - Rollbahn einander gegenüber angeordnet sind, um einen inneren - beziehungsweise äußeren - Rollweg zu bilden, in dem eine Reihe von Rollkörpern (3) angeordnet ist, wobei zumindest ein Ring (1, 2) zwischen seinen Rollbahnen (1i, 1e; 2i, 2e) eine Kerbe (15) aufweist, und ein Einsatz (19) zum Vorspannen rund um die äußere Rollbahn (2e) angeordnet ist.

7. Montage nach Anspruch 6, **dadurch gekennzeichnet, dass** der äußere Ring (1) zwischen seinen Rollbahnen (1i, 1e) eine Kerbe (15) aufweist.

8. Montage nach Anspruch 6 oder 7, **dadurch gekennzeichnet, dass** zumindest ein Ring (1, 2) Verbindungsmittel (1a, 2a) mit einem Organ aufweist.

9. Montage nach irgendeinem der Ansprüche 6 bis 8, **dadurch gekennzeichnet, dass** die Rollwege Schräglager mit unterschiedlichen Berührungswinkeln sind.

10. Montage nach irgendeinem der Ansprüche 6 bis 9, **dadurch gekennzeichnet, dass** die Reihe von Rollkörpern (3) des inneren Rollweges mit einem Rückhaltekäfig (13a) ausgestattet ist, der verformt werden kann, um radial um die besagte Reihe montiert werden zu können.

11. Montage nach Anspruch 10, **dadurch gekennzeichnet, dass** der Rückhaltekäfig (13a) einen Kranz (20) aufweist, auf dem sich radial Aufnahmen (21) für jeweils einen Rollkörper (3) erstrecken, wobei der besagte Kranz einen Spalt (22) aufweist, um seine Montage um die innere Reihe von Rollkörpern (3) zu ermöglichen.

12. Montage nach Anspruch 11, **dadurch gekennzeichnet, dass** der Spalt (22) mit einem Mittel zum Schließen des Kranzes (20) nach erfolgter Montage ausgestattet ist.

13. Montage nach Anspruch 11 oder 12, **dadurch gekennzeichnet, dass** die Aufnahmen (21) winkelig durch Materialbrücken (23) getrennt sind, die eine geeignete Geometrie aufweisen, um die Rollkörper (3) bei der Montage zu trennen.

## Claims

1. Assembling method of a rolling bearing comprising two rings - an outer ring (1) and inner ring (2) respectively - mounted in relative rotation by means of two rows of rolling bodies (3), each ring (1, 2) having two rolling tracks - an inner track (1i, 2i) and an outer track (1e, 2e) respectively - which are spaced apart axially, with a diameter of the outer track (1e, 2e) being smaller than the diameter of the inner track (1i, 2i), the inner tracks (1i, 2i) - and external tracks (1e, 2e) respectively - being arranged opposite one another to form an inner rolling path - and external rolling path respectively - in which a row of rolling bodies (3) is arranged, said method including:
- forming a notch (15) on at least one ring (1, 2) between its rolling tracks (1i, 1e; 2i, 2e);
- arranging the outer ring (1) around the inner ring (2) with their rolling tracks (1i, 1e, 2i, 2e) opposite one another;
- decentring said rings to form an upper mouth (16) for introducing rolling bodies (3) into the inner rolling path;
- arranging the notch (15) in the upper mouth (16) so as to form a passage of sufficient size for the rolling bodies (3);
- introducing the rolling bodies (3) of the outer row into the upper mouth (16) to arrange them in the outer rolling path by means of the passage;
- turning the rings (1, 2) in relation to one another so that the notch (15) no longer forms in the upper mouth (16) a passage of sufficient size for the rolling bodies (3);
- introducing the rolling bodies (3) of the inner row into the upper mouth (16) so as to arrange them in the inner rolling path;
- recentring the rings (1, 2).

2. Assembling method according to claim 1, **characterised in that** the step of recentring the rings (1, 2) comprises heating the outer ring (1).

3. Assembling method according to either claim 1 or claim 2, **characterised in that** the decentred rings (1, 2) are in radial abutment opposite the upper mouth (16).

4. Assembling method according to any one of claims 1 to 3, **characterised in that** the arrangement of the notch (15) in the upper mouth (16) is performed by turning the rings (1, 2) relative to one another.

5. Assembling method according to any one of claims 1 to 4, **characterised in that** it includes the use of a tool (17) comprising an upper ramp (18) for positioning the rolling bodies (3) in the outer rolling path.

6. Mounting method of a wheel (4) of an automobile by means of a rolling bearing assembled by implementing a method according to any one of claims 1 to 5, said bearing comprising two one-piece rings - an outer ring (1) and inner ring (2) respectively - mounted in relative rotation by means of two rows of rolling bodies (3), the inner ring (2) being associated with the structure of the vehicle on the inner side and the outer ring (1) being associated with the wheel (4) on the outer side, each ring (1, 2) having two rolling tracks - an inner track (1i, 2i) and an outer track (1e, 2e) respectively, - which are spaced apart axially with a diameter of the outer track (1e, 2e) which is smaller than the diameter of the inner track (1i, 2i), the inner tracks (1i, 2i) - outer tracks (1e, 2e) respectively - being arranged opposite one another to form an inner rolling path - outer rolling path respectively - in which a row of rolling bodies (3) is arranged, at least one ring (1, 2) having a notch (15) between its rolling tracks (1i, 1e; 2i, 2e), a preloading insert (19) being arranged around the outer rolling track (2e).

7. Mounting according to claim 6, **characterised in that** the outer ring (1) has a notch (15) between its rolling tracks (1i, 1e).

8. Mounting according to either claim 6 or claim 7, **characterised in that** at least one ring (1, 2) has means (1a, 2a) for associating with a member.

9. Mounting according to any one of claims 6 to 8, **characterised in that** the rolling paths are in oblique contact with different contact angles.

10. Mounting according to any one of claims 6 to 9, **characterised in that** the row of rolling bodies (3) of the inner rolling path is provided with a retaining cage (13a) which is deformable to as to be mounted radially around said row.

11. Mounting according to claim 10, **characterised in that** the retaining cage (13a) has a crown (20) on which housings (21) extend radially for a rolling body (3) respectively, said crown having a slot (22) to enable it to be mounted around the inner row of rolling bodies (3).

12. Mounting according to claim 11, **characterised in that** the slot (22) is equipped with a means for closing the crown (20) after mounting.

13. Mounting according to either claim 11 or claim 12, **characterised in that** the housings (21) are separated angularly by bridges of material (23) which have a geometry which is shaped for spreading the rolling bodies (3) during the mounting.
